# EUROPÄISCHE PATENTSCHRIFT

(11) **EP 0 776 802 B1**
(45) Veröffentlichungstag und Bekanntmachung des Hinweises auf die Patenterteilung: **09.02.2000**
(21) Anmeldenummer: 96117942.1
(22) Anmeldetag: 08.11.1996
(51) Int. Cl.: B60S 1/16, B60S 1/34

(54) **Scheibenwischerwelle-Durchführungstülle**
Grommet for windscreen wiper shaft
Douille de traversée pour l'arbre d'un essuie-glace

(30) Priorität: 01.12.1995 DE 19544903
(43) Veröffentlichungstag der Anmeldung: 04.06.1997
(73) Patentinhaber: Ford Global Technologies, Inc., Dearborn, Michigan 48126-2490 (US)
(72) Erfinder: Reinl, Hans-Georg, 50129 Bergheim (DE)
(74) Vertreter: Messulam, Alec Moses

(56) Entgegenhaltungen:
- DE-A- 2 539 006
- DE-A- 3 914 231
- GB-A- 2 091 545

## Beschreibung

Die Erfindung bezieht sich auf eine Scheibenwischerwelle-Durchführungstülle für eine von einem an einem Kraftfahrzeug-Karosseriebauteil befestigten Scheibenwischermotor auskragenden Schweibenwischerwelle, wobei die in einer in einer Öffnung in einem Karosserie-Außenblech angeordneten Durchführungstülle aus elastischem Material mit einer Gleitlagerung und einer Abdichtlippe versehen ist und die Scheibenwischerwelle zusätzlich abstützt und abdichtet.

Aus der GB-A-2 091 545 ist eine Scheibenwischerwelle-Durchführungstülle der im Oberbegriff des Patentanspruches 1 erläuterten Art bekannt.

Die bekannte Scheibenwischerwelle-Durchführungstülle weist den Nachteil auf, daß sie durch ihren Hauptkörper aus elastischem Material die Scheibenwischerwelle nur unzureichend abstützen kann und daß die zur Abdichtung der Scheibenwischerwelle vorgesehene Abdichtlippe völlig ungeschützt vor eventuellen Beschädigungen bei der Montage des Scheibenwischerarmes ist.

Die Aufgabe der Erfindung ist es, eine Scheibenwischerwelle-Durchführungstülle, der im Oberbegriff des Patentanspruches 1 erläuterten Art derart zu verbessern, daß eine sichere zusätzliche Abstützung und Abdichtung der Scheibenwischerwelle erzielt wird.

Gemäß der Erfindung wird diese Aufgabe gelöst, indem eine Scheibenwischerwelle-Durchführungstülle gemäß dem Oberbegriff des Patentanspruches 1 die im Kennzeichenteil des Patentanspruches 1 aufgezeigten Merkmale aufweist.

Dadurch, daß die Durchführungstülle aus festerem elastischem Material als das der Schiebehülse besteht und über einen Befestigungsclip aus zähelastischem Material in der Öffnung des Karosserie-Außenbleches angesetzt ist, kann eine sicherere Abstützung der Scheibenwischerwelle erzielt werden.

Die axial verlagerbare Schiebehülse ist hierbei in ihrer Innenbohrung mit zwei im Abstand angeordneten Gleitlagern versehen und weist an ihrem Außenumfang eine Nase auf, die mit einer Nut im Innern der Durchführungstülle zusammenwirkt, um eine Verdrehung zu verhindern.

Die axial verlagerbare Schiebehülse ist an ihrem zum Befestigungskonus für den Scheibenwischerarm liegenden Ende mit einer die dort angeordnete Dichtlippe axial überragenden Schutzkragen versehen, der eine Beschädigung der Dichtlippe beim Aufsetzen des Scheibenwischerarmes verhindert.

Weitere vorteilhafte Einzelheiten sind in den Ansprüchen 4 und 5 erläutert.

Die Erfindung wird anhand eines in den beigefügten Zeichnungen gezeigten Ausführungsbeispieles näher erläutert. Es zeigt:

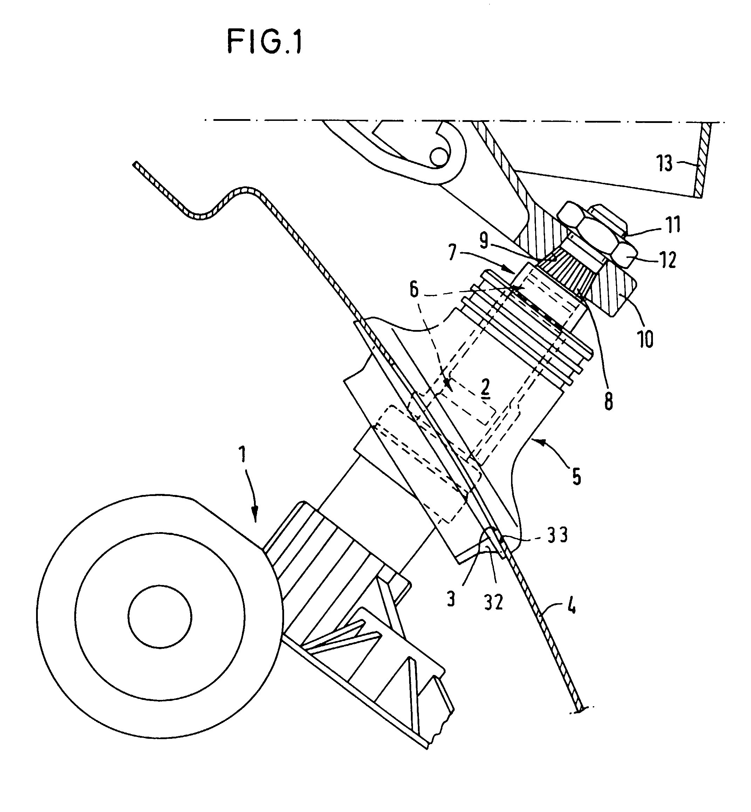

- Fig. 1: eine Seitenansicht einer erfindungsgemäßen Scheibenwischerwelle-Durchführungstülle in Einbausituation;
- Fig. 2: einen Schnitt durch die Scheibenwischerwelle-Durchführungstülle gemäß der Erfindung.

Bei einer Scheibenwischeranordnung, wie z.B. der Anordnung eines Heckscheibenwischers, ist ein Scheibenwischermotor 1 an einem nicht näher bezeichneten Kraftfahrzeug-Karosserieteil befestigt und weist eine auskragende Scheibenwischerwelle 2 auf, die sich durch eine Öffnung 3 in einem Karossierie-Aussenblech 4 erstreckt und dort über eine Durchführungstülle 5 aus elastischem Material, die mit einer Gleitlagerung 6 und einer Abdichtlippe 7 versehen ist, zusätzlich abgestützt und abgedichtet ist.

Die Scheibenwischerwelle 2 ist hierbei mit einem Befestigungskonus 8 zur Aufnahme der Befestigungsbohrung 9 eines Scheibenwischerarmes 10 versehen, der über ein an der Scheibenwischerwelle 2 ausgebildetes Gewinde 11 mittels einer Mutter 12 befestigt wird. Die Befestigung 11/12 des Scheibenwischerarmes 10 wird in an sich bekannter Weise durch eine Abdeckkappe 13 verdeckt.

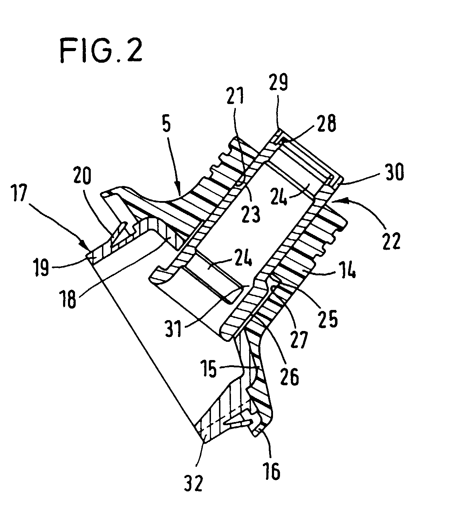

Im Zusammenhang mit Fig. 2 wird nunmehr die erfindungsgemäße Ausführung der Scheibenwischerwelle-Durchführungstülle 5 im einzelnen erläutert.

Die Scheibenwischwelle-Durchführungstülle 5 besteht im wesentlichen aus einem zylindrischen Hauptkörper 14 und einem scheibenförmigen Fußteil 15 mit einem Abdichtflansch 16 und besteht aus einem verhältnismäßig festeren elastischen Material.

Die Scheibenwischerwelle-Durchführungstülle 5 besteht weiterhin aus einem Befestigungsclip 17 aus zähelastischem Material, der einen Scheibenteil 18 und einen zylindrischen Einsatzteil 19 mit einer Vielzahl von Rastzungen 20 aufweist. Der Fußteil 15 der Durchführungstülle 5 ist mit dem Scheibenteil 18 des Befestigungsclips 17 in einer an sich bekannten Weise, z.B. durch Verkleben, Anspritzen oder dergleichen, verbunden. Mittels des Befestigungsclipses 17 kann die Durchführungstülle 5 sehr lagefest in der Öffnung 3 des Karosserie-Außenbleches 4 eingesetzt werden.

Der Hauptkörper 14 der Durchführungstülle 5 weist eine Innenbohrung 21 auf, in der eine axial verlagerbare Schiebehülse 22 mit Gleitsitz angeordnet ist.

Die Schiebehülse 22 ist an ihrem Innenumfang 23 mit zwei Gleitlagereinsätzen 24 versehen. An ihrem Außenumfang 25 ist sie mit einer Nase 26 versehen, die mit einer Nut 27 an der Innenbohrung 21 der Durchführungstülle 5 zusammenwirkt, um eine Verdrehsicherung zu bilden.

An dem zum Befestigungskonus liegenden Ende der Schiebehülse 22 ist diese mit einem die dort angeordnete Dichtlippe 28 axial überragenden Schutzkragen 29 versehen, der beim Aufsetzen des Scheibenwischerarmes 10 eine Beschädigung der Dichtlippe vermeidet.

An der Schiebehülse 22 ist im Bereich des Schutzkragens 29 ein Wasserablaufschlitz 30 und im Bereich der hinteren Gleitlagerung 24 eine Wasserablaufnut 31 angeordnet, damit kein Wasserstau im Schutzkragen und im Gleitlagerbereich auftritt.

Da die Scheibenwischerwelle-Durchführungstülle 5 einen asymetrischen Aufbau aufweist, ist an ihrem Befestigungsclip 17 eine radiale Nase 32 vorgesehen, mit der in Verbindung mit einer Rastnut 33 in der Öffnung 3 im Karosserie-Außenblech 4 eine lagerichtige Montage gewährleistet wird.

Die erfindungsgemäße Scheibenwischerwelle-Durchführungstülle 5 weist den Vorteil auf, daß durch die in ihr axial verlagerbar angeordnete Schiebehülse 22 größere Toleranzen in der Breite der Karosseriebauteile ausgeglichen werden können, d.h., die sich um ein beträchtliches Maß aus der Durchführungstülle 5 erstreckende Scheibenwischerwelle 2 wird bis unmittelbar zum Befestigungskonus 8 des Scheibenwischerarmes 10 von der schützenden Schiebehülse aus elastischem Material abgedeckt.

Bei der Montage wird hierbei die Schiebehülse zunächst in ihrer maximal nach außen verschobenen Lage in der Durchführungstülle 5 angeordnet und wird erst beim Aufsetzen des Scheibenwischerarmes 10 durch zum Anschlag kommen des Scheibenwischerarmes 10 an den Schutzkragen 29 soweit zurückgedrückt, daß praktisch kaum ein Spalt zwischen der Schiebehülse und dem Scheibenwischerarm verbleibt. Dementsprechend kann die geschützt angeordnete Dichtlippe 28 ihre Funktion in einer geschützten Lage wahrnehmen und nur für den Fall, daß es doch nach längerer Betriebsdauer zu einem Wassereintritt in den Bereich der Gleitlageranordnungen 24 kommt, ist durch die Wasserablaufnut 31 eine Ableitung des Wassers vorgesehen, um zu vermeiden, daß Wasser bis zum Scheibenwischermotor gelangt und diesen durch Eintritt zerstört.

## Patentansprüche

1. Scheibenwischerwelle-Durchführungstülle für eine von einem an einem Kraftfahrzeug-Karosseriebauteil befestigten Scheibenwischermotor (1) auskragenden Scheibenwischerwelle (2), wobei die in einer Öffnung (3) in einem Karosserie-Außenblech (4) lagefesteinsetzbare Durchführungstülle (5) aus elastischem Material besteht und wobei eine Gleitlagerung (24) sowie eine Abdichtlippe (28) vorgesehen sind, die die Scheibenwischerwelle (2) zusätzlich abstützt sowie abdichtet, und wobei
- die Gleitlagerung (24) und die Abdichtlippe (28) in einer in der Durchführungstülle (5) axial verlagerbaren Schiebehülse (22) aus elastischem Material angeordnet sind, dadurch gekennzeichnet, daß
- die elastische Durchführungstülle (5), die mit ihrem Hauptkörper (14) aus festerem elastischen Material besteht mit einem Befestigungsclip (17) aus zähelastischem Material, fest verbunden ist, der in der Öffnung (3) des Karosserie-Außenbleches (4) lagefest einrastbar ist.

2. Scheibenwischerwelle-Durchführungstülle nach Anspruch 1,
**dadurch gekennzeichnet,** daß die axial verlagerbare Schiebehülse (22)
- in ihrer In nenbohrung (23) mit zwei im Abstand angeordneten Gleitlagern (24) versehen ist und
- an ihrem Außenumfang (2) mit einer Nase (26) versehen ist, die mit einer am Innenumfang (21) des Hauptkörpers (14) der Durchführungstülle (5) angeordneten Nut (27) zusammenwirkt, um eine Verdrehung zu verhindern.

3. Scheibenwischerwelle-Durchführungstülle nach den Ansprüchen 1 und 2,
**dadurch gekennzeichnet,** daß
- die axial verlagerbare Schiebehülse (22) an ihren zum Befestigungskonus (8) für den Scheibenwischerarm (10) liegenden Ende mit einer die dort angeordnete Dichtlippe (28) axial überragenden Schutzkragen (29) versehen ist.

4. Scheibenwischerwelle-Durchführungstülle nach den Ansprüchen 1 bis 3,
**dadurch gekennzeichnet**, daß
- die axial verlagerbare Schiebehülse (22) im unteren Bereich des Schutzkragens (29) ein Wasserablaufschlitz (30) und im Bereich des hinteren Gleitlagers (24) eine Wasserablaufnut (31) aufweist.

5. Scheibenwischerwelle-Durchführungstülle nach den Ansprüchen 1 bis 3,
**dadurch gekennzeichnet,** daß
- der Befestigungsclip (17) mit einer radial vorspringenden Nase (32) versehen ist, die in Verbindung mit einer Rastnut (33) in der Öffnung (3) im Karosserie-Außenblech (4) eine lagerichtige Montage sicherstellt.

## Claims

1. Windscreen wiper shaft bushing socket for a windscreen wiper shaft (2) projecting from a windscreen wiper motor (1) mounted on a bodywork part of a motor vehicle,
whereby the bushing socket (5), which can be inserted in a non-displaceable manner in an opening (3) in an exterior body sheet (4), consists of elastic material and whereby a sliding bearing arrangement (24) and a sealing lip (28) are provided which additionally support and seal the windscreen wiper shaft (2), and whereby the sliding bearing arrangement (24) and the sealing lip (28) are positioned in a sliding sleeve (22), made of elastic material, which is axially displaceable in the bushing socket (5), characterised in that
- the elastic bushing socket (5), the main body (14) of which consists of more solid elastic material, is firmly connected to a fixing clip (17), made of tough material, which can be snapped into place in a non-displaceable manner in the opening (3) of the exterior body sheet (4).

2. Windscreen wiper shaft bushing socket according to Claim 1, characterised in that the axially displaceable sliding sleeve (22)
- is provided, in its inner bore hole (23), with two spaced sliding bearing arrangements (24) and
- is provided, at its circumference (2), with a projection (26) which cooperates with a groove (27) situated on the inner circumference (21) of the main body (14) of the bushing socket (5) in order to prevent torsion.

3. Windscreen wiper shaft bushing socket according to Claims 1 and 2, characterised in that
- the axially displaceable sliding sleeve (22) is provided, at its end adjacent to the fixing cone (8) for the windscreen wiper arm (10), with a protective shroud (29) which axially projects beyond the sealing lip (28) positioned there.

4. Windscreen wiper shaft bushing socket according to Claims 1 to 3, characterised in that
- the axially displaceable sliding sleeve (22) has a water outlet slot (30) in the lower area of the protective shroud (29) and a water outlet groove (31) in the area of the rear sliding bearing (24).

5. Windscreen wiper shaft bushing socket according to Claims 1 to 3, characterised in that
- the fixing clip (17) is provided with a radially protruding projection (32) which, in conjunction with a locking groove (33) in the opening (3) in the exterior body sheet (4), ensures correct positioning on assembly.

## Revendications

1. Douille de traversée pour l'arbre d'un essuie-glace, destinée à un arbre d'essuie-glace (2) saillant au-delà d'un moteur d'essuie-glace (1) fixé à une partie constitutive de la carrosserie d'un véhicule automobile, la douille de traversée (5), pouvant être insérée en position stable dans une ouverture (3) pratiquée dans une tôle extérieure (4) de la carrosserie, étant constituée d'un matériau élastique, auquel cas sont prévus des paliers lisses (24) et une lèvre d'étanchement (28) qui confèrent un soutien et une étanchéité supplémentaires à l'arbre d'essuie-glace (2), et
- le palier lisse (24) et la lèvre d'étanchement (28) étant disposés dans un fourreau coulissant (22) en un matériau élastique, mobile axialement dans la douille de traversée (5), caractérisée par le fait que
- la douille élastique de traversée (5), dont le corps principal (14) consiste un en matériau élastique plus rigide, est reliée fermement à un clip de fixation (17) en un matériau viscoélastique pouvant être encliqueté, avec position stable, dans l'ouverture (3) de la tôle extérieure (4) de la carrosserie.

2. Douille de traversée pour l'arbre d'un essuie-glace, selon la revendication 1, caractérisée par le fait que le fourreau coulissant (22) mobile axialement est muni, dans son alésage intérieur (23), de deux paliers lisses (24) agencés avec espacement et
- est pourvu, sur son pourtour extérieur (25), d'un mentonnet (26) qui coopère avec une saignée (27), ménagée sur le pourtour intérieur (21) du corps principal (14) de la douille de traversée (5), de manière à empêcher une rotation.

3. Douille de traversée pour l'arbre d'un essuie-glace, selon les revendications 1 et 2,
caractérisée par le fait que
- le fourreau coulissant (22) mobile axialement est doté, à son extrémité tournée vers le cône de fixation (8) affecté au bras d'essuie-glace (10), d'un collet de protection (29) dépassant axialement au-delà de la lèvre d'étanchement (28) située à cet emplacement.

4. Douille de traversée pour l'arbre d'un essuie-glace, selon les revendications 1 à 3,
caractérisée par le fait que
- le fourreau coulissant (22), mobile axialement, présente une fente (30) d'écoulement de l'eau dans la région inférieure du collet de protection (29), et une gorge (31) d'écoulement de l'eau dans la région du palier lisse (24) postérieur.

5. Douille de traversée pour l'arbre d'un essuie-glace, selon les revendications 1 à 3,
caractérisée par le fait que
- le clip de fixation (17) est muni d'un appendice (32) saillant radialement, qui assure un montage dans une position correcte en association avec une rainure d'encliquetage (33) dans l'ouverture (3) pratiquée dans la tôle extérieure (4) de la carrosserie.
